# EUROPÄISCHE PATENTANMELDUNG

(11) **EP 1 397 978 A2**
(43) Veröffentlichungstag der Anmeldung: **17.03.2004**
(21) Anmeldenummer: 03450205.4
(22) Anmeldetag: 12.09.2003
(51) Int. Cl.: A47B 47/00, F16B 12/02

(54) **Möbel**

(30) Priorität: 13.09.2002 AT 61202 U
(71) Anmelder: Voglauer Möbel Ges.m.bH, 5441 Abtenau (AT)
(72) Erfinder: Exl, Peter, 9300 St. Veit/Glan (AT)
(74) Vertreter: Sonn & Partner Patentanwälte

(57) **Zusammenfassung**

Die Erfindung betrifft ein Möbel mit Platten und Verbindungselementen zur Verbindung der Platten, wobei die Verbindungselemente (3) zur Verbindung von in der Gebrauchslage des Möbels vertikal angeordneten Platten (1,2) durch jeweils zumindest ein in der Gebrauchslage des Möbels vertikal angeordnetes Rohr (4) mit gekrümmter Mantelfläche (11) gebildet sind. Zur Schaffung eines flexibel gestaltbaren, aber auch rasch und einfach zusammenstellbaren Möbel ist vorgesehen, dass die an das Verbindungsrohr (4) angrenzenden Stirnflächen (5,6) der zu verbindenden vertikalen Platten (1,2) konkav gekrümmt sind, vorzugsweise mit der selben Krümmung wie die Mantelfläche (11) des Verbindungsrohrs (4) und somit eine Aufnahme für das Verbindungsrohr (4) bilden.

## Beschreibung

Die Erfindung betrifft ein Möbel mit Platten und Verbindungselementen zur Verbindung der Platten, wobei die Verbindungselemente zur Verbindung von in der Gebrauchslage des Möbels vertikal angeordneten Platten durch jeweils zumindest ein in der Gebrauchslage des Möbel vertikal angeordnetes Rohr mit gekrümmter Mantelfläche gebildet sind.

Unter den Begriff Möbel fallen verschiedene Einrichtungen wie Schränke, Tische, Kästen, Regale aber auch Paravents oder dergl., welche aus miteinander verbundenen Platten aufgebaut sind. In der Regel bestehen die Hauptbestandteile des Möbelstücks aus im Wesentlichen ebenen Platten. Im Rahmen dieser Erfindung fallen jedoch auch andere Elemente, wie z.B. Leisten, Balken oder dergl. unter den Begriff Platten.

Häufig werden Möbel aus Platten hergestellt, welche miteinander verleimt werden. Ein Nachteil bei diesen Verbindungen ist, dass eine nachträgliche Veränderung des Möbels oder ein Verlegen desselben unmöglich oder nur mit der Gefahr einer Beschädigung zumindest vom Bestandteil des Möbels möglich ist. Die resultierenden scharfen Kanten und Ecken des Möbels können leicht beschädigt werden und erhöhen zudem das Risiko von Verletzungen. Darüber hinaus bieten derartige Kanten und Ecken, insbesondere dann, wenn sie beschädigt sind, kein optimales optisches Erscheinungsbild.

Zur Schaffung von Verbindungen bei Möbelstücken, welche leichter lösbar sind und darüber hinaus stabiler sind, wurden unzählige Konstruktionen geschaffen.

Beispielsweise beschreibt die EP 1 081 393 A1 ein Verbindungselement zur Verbindung von Platten, bei dem ein Verbindungselement in Form eines Profils zwischen den aneinanderstoßenden Stirnseiten der Platten angeordnet wird und über ein Abdeckprofil befestigt wird. Mit Hilfe derartiger Verbindungselemente kann zwar der Eckbereich bzw. Stoßbereich zweier Platten optisch optimal gestaltet werden und darüber hinaus eine hohe Stabilität erzielt werden. Der Herstellungsaufwand für die Verbindungselemente sowie der Montageaufwand ist jedoch relativ hoch.

Die DE 297 07 021 U1 zeigt eine verdeckte Verbindung zwischen einem Rundrohr und Holz, Kunststoff oder Stahlzargen, die in jedem gewünschten Winkelabstand und jeder Höhe angebracht werden kann.

Die US 5 014 861 A zeigt ein modulares System zum Aufbau von Möbeln.

Die Aufgabe der vorliegenden Erfindung besteht in der Schaffung eines oben erwähnten Möbels, welches rasch und einfach zusammengebaut werden kann, die notwendige Stabilität aufweist und eine möglichst flexible Gestaltung des Möbels zulässt. Darüber hinaus soll das Möbel aus möglichst wenig Einzelteilen bestehen und möglichst kostengünstig sein. Darüber hinaus sollen scharfe Kanten und Ecken möglichst vermieden werden.

Gelöst wird die erfindungsgemäße Aufgabe dadurch, dass die an das Verbindungsrohr angrenzenden Stirnflächen der zu verbindenden vertikalen Platten konkav gekrümmt sind und eine Aufnahme für das Verbindungsrohr bilden. Durch die konkav gekrümmt ausgeführten Stirnflächen der zu verbindenden Platten wird eine optimale Aufnahme für das Verbindungsrohr mit gekrümmter Mantelfläche gebildet und somit eine stabile Verbindung zwischen den Platten hergestellt. Durch die gekrümmte Mantelfläche des Verbindungsrohrs werden Kanten und Ecken vermieden und somit das Beschädigungs- oder Verletzungsrisiko minimiert.

Vorteilhafterweise weisen die Verbindungsrohre zylindrischen Querschnitt auf. Dadurch sind die Herstellungskosten der Verbindungselemente besonders niedrig. Darüber hinaus wird eine noch höhere Flexibilität bei der Herstellung der Möbel geschaffen, da die vertikalen Platten bei zylindrischen Verbindungsrohren in beliebigem Winkel aneinandergefügt werden können.

Wenn zumindest die äußere Oberfläche der in der Gebrauchslage des Möbels vertikal angeordneten Platten tangential an die Mantelfläche der Verbindungsrohre angrenzt, wird ein Möbel mit Verbindungen zwischen den Platten geschaffen, die keinerlei Kanten aufweisen. Darüber hinaus sind derartig aufgebaute Möbel optisch besonders ansprechend.

Vorteilhafterweise wird der Durchmesser der Verbindungsrohre gleich der Dicke der vertikal angeordneten Platten gewählt und es grenzen die Oberflächen der Platten tangential an die Mantelfläche der Verbindungsrohre.

Gemäß einem weiteren Merkmal der Erfindung ist vorgesehen, dass zur Verbindung von in der Gebrauchslage des Möbel vertikal angeordneten Platten zwei vertikal angeordnete und voneinander beabstandete und miteinander verbundene Rohre verwendet werden.

Wenn diese zwei Rohre gelenkig miteinander verbunden sind, können Verbindungen geschaffen werden, welche nicht starr sondern beweglich sind und somit eine flexible Gestaltung des Möbels zulassen. Auf diese Weise können beispielsweise Paravents hergestellt werden.

Die gelenkige Verbindung zwischen zwei Verbindungsrohren kann durch in die Verbindungsrohre einsteckbare Elemente gebildet werden, welche Elemente über eine Lochplatte drehbar miteinander verbunden sind. Dies bietet eine kostengünstige Realisierungsmöglichkeit für die gelenkige Verbindung.

Wenn die Verbindungsrohre mit den angrenzenden Stirnseiten der zu verbindenden vertikalen Platten in an sich bekannter Weise über Schrauben, vorzugsweise Exzenter-Schrauben miteinander verbunden sind, können herkömmliche Elemente eingesetzt werden, was sich wiederum positiv auf die Gesamtkosten auswirkt.

Vorteilhafterweise sind die Verbindungsrohre aus Metall hergestellt. Dadurch wird die notwendige Stabilität geschaffen.

Die Platten können aus Holz bestehen, wobei neben Vollholz meist auch Spanplatten und mitteldichte Faserplatten (sog. MDF-Platten) zur Anwendung kommen.

Gemäß einem weiteren Merkmal der Erfindung kann zumindest eine Platte durch einen Rahmen und zumindest eine Füllung gebildet sein. Auf diese Weise können leicht verschiedene Ausstattungsvarianten gebildet werden.

Dabei kann der Rahmen durch Profile mit einer Aufnahme für die Füllung gebildet werden.

Für bestimmte Ausführungsvarianten kann die Füllung auch aus Glas gebildet sein.

Gemäß einem weiteren Merkmal der Erfindung ist vorgesehen, dass die Verbindungsrohre Standfüße aufweisen. Diese bieten dem Möbel eine erhöhte Standfestigkeit und können darüber hinaus auf den jeweiligen Untergrund abgestimmt werden. Zur leichteren und rascheren Herstellbarkeit des Möbels werden die Standfüße vorteilhafterweise nur in die Verbindungsrohre eingesteckt oder über Schnell-Verbindungen, wie z.B. Bajonett-Verbindungen, angeordnet.

Wenn zwischen den Standfüßen und den Verbindungsrohren Elemente zur Höhenverstellung vorgesehen sind, kann eine Verstellung der Höhe aber auch ein Ausgleich an unebene Untergründe geschaffen werden. Die Höhenverstellungselemente können in an sich bekannter Weise durch entsprechende Hochstellschrauben gebildet sein.

Zur weiteren Vermeidung von Kanten aber auch aus optischen Gründen sind an den Enden der Verbindungsrohre vorzugsweise einsteckbare Abschlusselemente vorgesehen. Diese können aus Kunststoff oder auch Holz hergestellt sein.

Die vorliegende Erfindung wird anhand der beigefügten Zeichnungen, welche Ausführungsbeispiele der Erfindung zeigen, näher erläutert. Darin zeigen:
Fig.1 eine Draufsicht auf eine Ausführungsform einer Eckverbindung;
Fig.2 die Draufsicht auf eine Verbindung zwischen einer Seitenwand und einer Tür;
Fig.3 eine perspektivische Ansicht des oberen Teils einer gelenkigen Verbindung zweier Platten;
Fig.4 eine perspektivische Ansicht des unteren Teils der gelenkigen Verbindung zweier Platten;
Fig. 5 eine Draufsicht auf eine Verbindung zwischen einer Seitenwand und einer Tür, bestehend aus einem Rahmen mit einer Glasfüllung;
Fig. 6 eine Draufsicht auf die aus einem Rahmen mit Glasfüllung gebildete Tür; und
Fig. 7 die Stirnansicht auf ein den Rahmen der Tür gemäß Fig. 5 und 6 bildendes Profil.

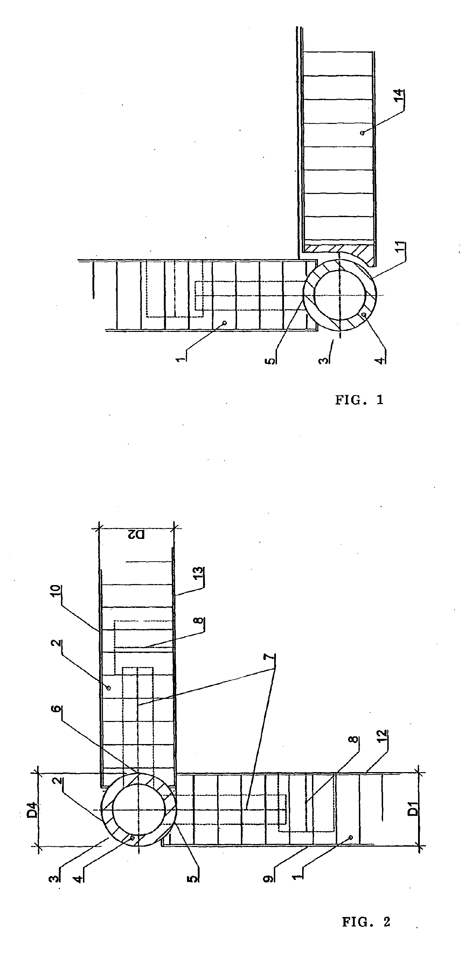

Fig.1 zeigt einen Teil eines Möbels bestehend aus zwei Platten 1, 2, welche beispielsweise die Seiten- und Rückwand eines Schranks bilden. Die beiden in der Gebrauchslage des Möbels vertikal angeordneten Platten 1, 2 werden über ein Verbindungselement 3 miteinander in einem Winkel von 90° verbunden. Das Verbindungselement 3 ist durch ein in der Gebrauchslage des Möbels vertikal angeordnetes Rohr 4 gebildet, das eine gekrümmte Mantelfläche aufweist. Im dargestellten Beispiel weist das Verbindungsrohr 4 zylindrischen Querschnitt auf. Es kann jedoch auch elliptischen, ovalen oder viereckigen Querschnitt mit abgerundetem Querschnitt aufweisen. Durch die gekrümmte Mantelfläche werden Kanten an den Verbindungsstellen des Möbels vermieden und auch eine optisch ansprechende Verbindung geschaffen.

Die an das Verbindungsrohr 4 angrenzenden Stirnflächen 5, 6 der zu verbindenden vertikalen Platten 1, 2 sind konkav gekrümmt, vorzugsweise mit einem der Mantelfläche des Verbindungsrohres 4 entsprechenden Krümmungsradius bzw. einer Krümmungskurve und bilden somit eine Aufnahme für das Verbindungsrohr 4. Die Verbindung zwischen dem Verbindungsrohr 4 und den Platten 1, 2 wird beispielsweise durch an sich bekannte Exzenter-Schrankverbinder geschaffen, bei denen eine entsprechende Schraube 7 in ein dafür vorgesehenes Gewinde im Verbindungsrohr 4 eingedreht wird und die Schraube 7 in ein dafür vorgesehenes Loch in der Platte 1, 2 gesteckt wird. Der Kopf der Schraube 7 wird danach in seiner Lage durch Verdrehen eines entsprechenden Elements, welches in einer Vertiefung 8 an der Innenseite der Platten 1, 2 angeordnet ist, fixiert. Dadurch kann ohne Verleimung eine Verwindungs-stabile Verbindung zwischen dem Verbindungsrohr 4 und den Platten 1, 2 geschaffen werden. Von Vorteil ist es, wenn zumindest die äußere Oberfläche 9, 10 der zu verbindenden Platten 1, 2 tangential an die Mantelfläche 11 der Verbindungsrohre 4 angrenzt. Vorteilhafterweise wird der Durchmesser D₄ der Verbindungsrohre 4 gleich der Dicke D₁, D₂ der vertikal angeordneten Platten 1, 2 gewählt und es grenzen sowohl die äußeren Oberflächen 9, 10 der zu verbindenden Platten 1, 2 als auch die inneren Oberflächen 12, 13 der Platten 1, 2 tangential an die Mantelfläche 11 der Verbindungsrohre 4 an. Dadurch wird eine harmonische Verbindung zwischen zwei Platten 1, 2 geschaffen. Durch die Verwendung der vertikal angeordneten Verbindungsrohre 4 zusammen mit der entsprechenden Ausgestaltung der Stirnseiten 5, 6 der zu verbindenden Platten 1, 2 kann ein leicht herstellbares und flexibel gestaltbares Möbel geschaffen werden.

Fig.2 zeigt eine Draufsicht auf eine Eckverbindung einer Seitenwand 1 mit einer Tür 14 eines Möbelstücks. Dabei wird die Verbindung in ähnlicher Weise wie bei der Eckverbindung gemäß Fig.1 gestaltet, lediglich dass zwischen der Tür 14 und dem Verbindungsrohr 4 keine Verbindung besteht. Dadurch kann die Schranktür 14 durch Verschwenken geöffnet werden.

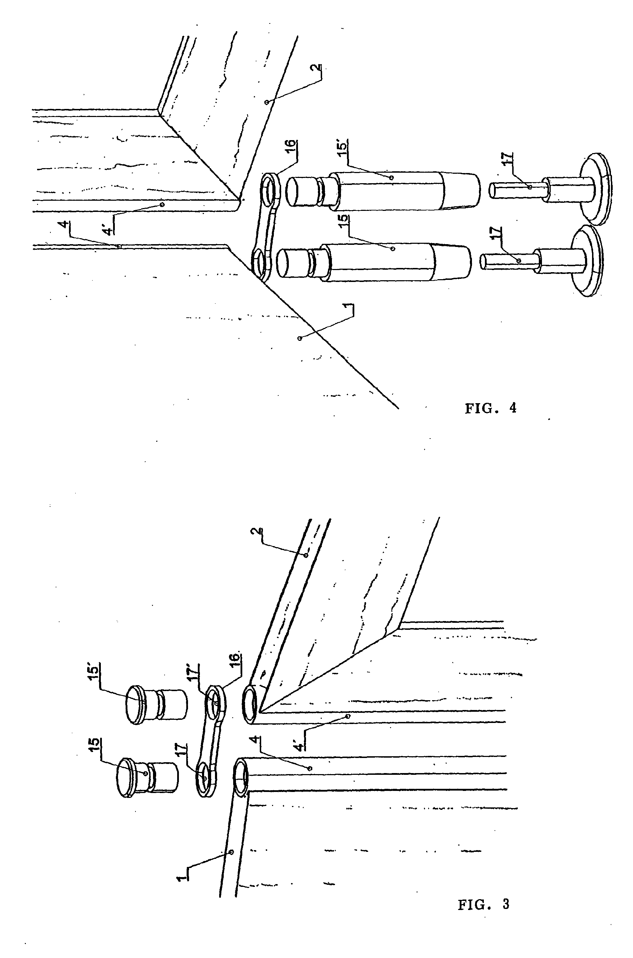

Fig.3 zeigt eine Verbindung zweier in der Gebrauchslage des Möbel vertikal angeordneter Platten 1, 2 durch zwei vertikal angeordnete und voneinander beabstandete und miteinander verbundene Rohre 4, 4'. Wenn die beiden verbindungsrohre 4, 4' gelenkig miteinander verbunden werden, kann eine Verdrehung der Platten 1, 2 gegeneinander erfolgen. In einfachster Weise wird die gelenkige Verbindung durch in die Verbindungsrohre 4, 4' einsteckbare Elemente 15, 15' gebildet, die über eine Platte 16 mit zwei Löchern 17, 17' drehbar miteinander verbunden sind. Diese Konstruktionsvariante einer gelenkigen Verbindung der beiden Rohre 4, 4' stellt eine von vielen Möglichkeiten dar. Auf diese Weise kann beispielsweise ein Paravent oder dergl. hergestellt werden.

Fig.4 zeigt eine perspektivische Ansicht der Unterseite der Verbindung gemäß Fig.3, bei der in die Verbindungsrohre 4, 4' bzw. die Elemente 15, 15' Standfüße 17 eingesteckt werden. Darüber hinaus können Elemente zur Höhenverstellung zwischen den Standfüßen 17 und den Verbindungsrohren 4, 4' angeordnet sein (nicht dargestellt).

Ebenso können an den offenen Enden der Verbindungsrohre 4 Abschlusselemente, beispielsweise aus Kunststoff oder Holz, angeordnet werden (nicht dargestellt).

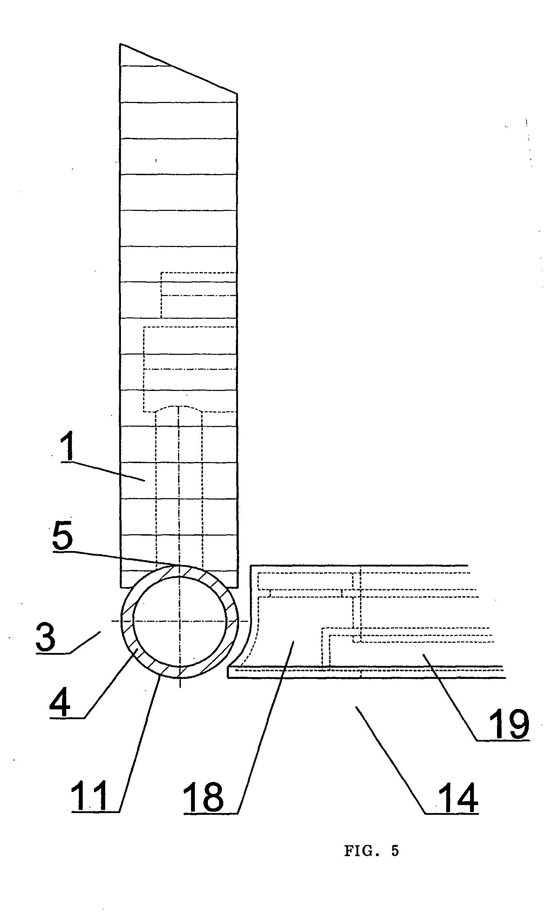

Fig. 5 zeigt eine Draufsicht auf eine Eckverbindung einer Seitenwand 1 mit einer Tür 14 eines Möbelstücks, wobei die Tür 14 aus einem Rahmen 18 und einer Füllung 19 gebildet ist. Wie bereits bei Fig. 2 erwähnt, bildet das Verbindungsrohr 4 in dieser Ausführungsvariante den Abschluss der Platte 1 und nicht eine Verbindung zwischen der Platte 1 und der Tür 14.

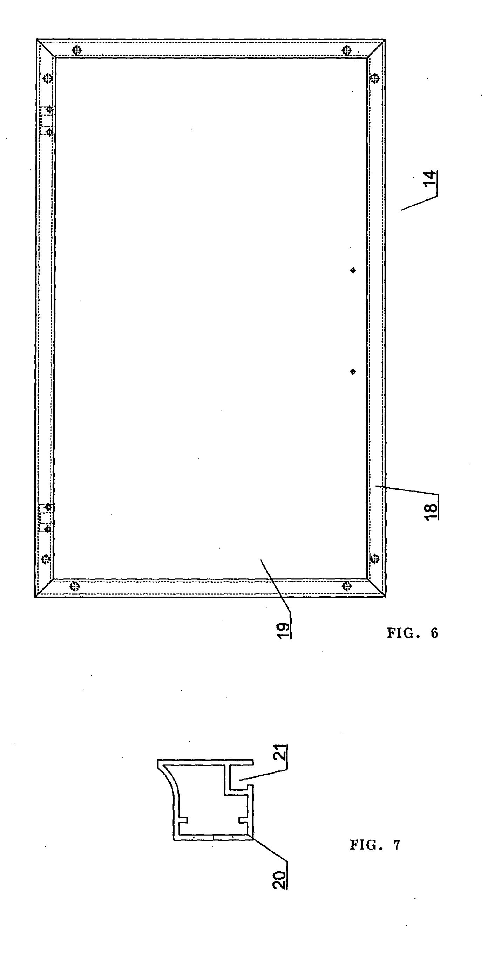

Wie aus Fig. 6 ersichtlich, kann die Tür 14 aus einem Rahmen 18 und zumindest einer Füllung 19 gebildet sein. Auf diese Weise können verschiedene Ausführungsvarianten durch Austauschen der Füllungen 19 gebildet werden. Beispielsweise kann die Füllung 19 auch aus Glas gebildet sein, um eine vitrine zu schaffen.

Fig. 7 zeigt die Stirnansicht auf ein den Rahmen 18 der Tür 14 bildendes Profil 20, welches vorzugsweise aus Aluminium gefertigt ist. Das Profil 20 weist eine Aufnahme 21 für die Füllung 19 auf. Das Profil 20 kann auch aus Kunststoff hergestellt sein.

## Patentansprüche

1. Möbel mit Platten und Verbindungselementen zur Verbindung der Platten, wobei die Verbindungselemente (3) zur Verbindung von in der Gebrauchslage des Möbel vertikal angeordneten Platten (1,2) durch jeweils zumindest ein in der Gebrauchslage des Möbels vertikal angeordnetes Rohr (4) mit gekrümmter Mantelfläche (11) gebildet sind, **dadurch gekennzeichnet, dass** die an das Verbindungsrohr (4) angrenzenden Stirnflächen (5,6) der zu verbindenden vertikalen Platten (1,2) konkav gekrümmt sind und eine Aufnahme für das Verbindungsrohr (4) bilden.

2. Möbel nach Anspruch 1, **dadurch gekennzeichnet, dass** die Verbindungsrohre (4) zylindrischen Querschnitt aufweisen.

3. Möbel nach einem der Ansprüche 1 bis 2, **dadurch gekennzeichnet, dass** zumindest die äußere Oberfläche (9,10) der in der Gebrauchslage des Möbel vertikal angeordneten Platten (1,2) tangential an die Mantelfläche (11) der Verbindungsrohre (4) angrenzt.

4. Möbel nach Anspruch 3, **dadurch gekennzeichnet, dass** der Durchmesser (D₄) der Verbindungsrohre (4) gleich der Dicke (D₁,D₂) der vertikal angeordneten Platten (1,2) ist und dass die Oberflächen (9,10,12,13) der Platten (1,2) tangential an die Mantelfläche (11) der Verbindungsrohre (4) angrenzen.

5. Möbel nach einem der Ansprüche 1 bis 4, **dadurch gekennzeichnet, dass** zur Verbindung von in der Gebrauchslage des Möbel vertikal angeordneten Platten (1,2) zwei vertikal angeordnete und voneinander beabstandete und miteinander verbundene Rohre (4,4') verwendet werden.

6. Möbel nach Anspruch 5, **dadurch gekennzeichnet, dass** die zwei Rohre (4,4') gelenkig miteinander verbunden sind.

7. Möbel nach Anspruch 6, **dadurch gekennzeichnet, dass** die gelenkige Verbindung durch in die Verbindungsrohre (4,4') einsteckbare Elemente (15,15') gebildet ist, welche Elemente (15,15') über eine Lochplatte (16) drehbar miteinander verbunden sind.

8. Möbel nach einem der Ansprüche 1 bis 7, **dadurch gekennzeichnet, dass** die Verbindungsrohre (4) mit den vertikalen Platten (1,2) in an sich bekannter Weise über Schrauben, vorzugsweise Exzenter-Schrauben (7), verbunden sind.

9. Möbel nach einem der Ansprüche 1 bis 8, **dadurch gekennzeichnet, dass** die Verbindungsrohre (4) aus Metall hergestellt sind.

10. Möbel nach einem der Ansprüche 1 bis 9, **dadurch gekennzeichnet, dass** die Platten (1,2) aus Holz bestehen.

11. Möbel nach einem der Ansprüche 1 bis 10, **dadurch gekennzeichnet, dass** zumindest eine Platte (1, 2) durch einen Rahmen (18) und zumindest eine Füllung (19) gebildet ist.

12. Möbel nach Anspruch 11, **dadurch gekennzeichnet, dass** der Rahmen (18) durch Profile (20) mit einer Aufnahme (21) für die Füllung (19) gebildet ist.

13. Möbel nach Anspruch 11 oder 12, **dadurch gekennzeichnet, dass** die Füllung (19) aus Glas gebildet ist.

14. Möbel nach einem der Ansprüche 1 bis 13, **dadurch gekennzeichnet, dass** die Verbindungsrohre (4) Standfüße (17) aufweisen.

15. Möbel nach Anspruch 14, **dadurch gekennzeichnet, dass** zwischen den Standfüßen (17) und den Verbindungsrohren (4) Elemente zur Höhenverstellung vorgesehen sind.

16. Möbel nach einem der Ansprüche 1 bis 15, **dadurch gekennzeichnet, dass** an den Enden der Verbindungsrohre (4) vorzugsweise einsteckbare Abschlusselemente vorgesehen sind.
